# EUROPEAN PATENT APPLICATION

(11) **EP 2 193 994 A2**
(43) Date of publication of application: **09.06.2010**
(21) Application number: 09172013.6
(22) Date of filing: 01.10.2009
(51) Int. Cl.: B64C 39/02

(54) **UAV ducted fan swept and lean stator design**

(30) Priority: 08.12.2008 US 330024
(71) Applicant: Honeywell International Inc., Morristown, NJ 07962 (US)
(72) Inventor: Burdisso, Ricardo, Morristown, NJ 07962-2245 (US)
(74) Representative: Buckley, Guy Julian

(57) **Abstract**

A ducted fan air-vehicle (100) having an air duct (102) and a fan (104) is described. The air duct (102) includes an outer rim (105) and an inner rim (107), and the fan (104) is located within the air duct (102) and rotates in a direction. The fan (102) also includes a hub (200), a plurality of struts (202) extending from the hub (200) and positioned adjacent the outer rim (105) of the fan (102), a plurality of stators (204) extending from the hub (200) and positioned adjacent the inner rim (107) of the fan (102), and a plurality of rotor blades (206) extending from the hub (200) and positioned between the plurality of struts (202) and the plurality of stators (204). The stators (204) are lean in a plane of fan rotation and swept in a plane normal to fan rotation to create the optimum amount of noise reduction in the ducted fan air-vehicle (100).

## Description

### GOVERNMENT RIGHTS

The United States Government has acquired certain rights in this invention pursuant to Contract No. MDA972-01-0018, awarded by the United States Army.

### FIELD

The present invention relates generally to ducted fan air-vehicles, and more particularly, relates to the design and orientation of stators or exit-guide vanes (EGVs) of ducted fan air-vehicles.

### BACKGROUND

Ducted fan air-vehicles, such as an Unmanned Aerial Vehicle (UAV) or a vertical-take-off-and-landing (VTOL) vehicle, may have at least one ducted fan and a fan engine to drive the fan blades. Ducted fan air-vehicles are well-known for performance capability in multiple flight conditions. For instance, ducted fan air-vehicles have the ability of forward flight and are well known for stationary hovering aerodynamic performance.

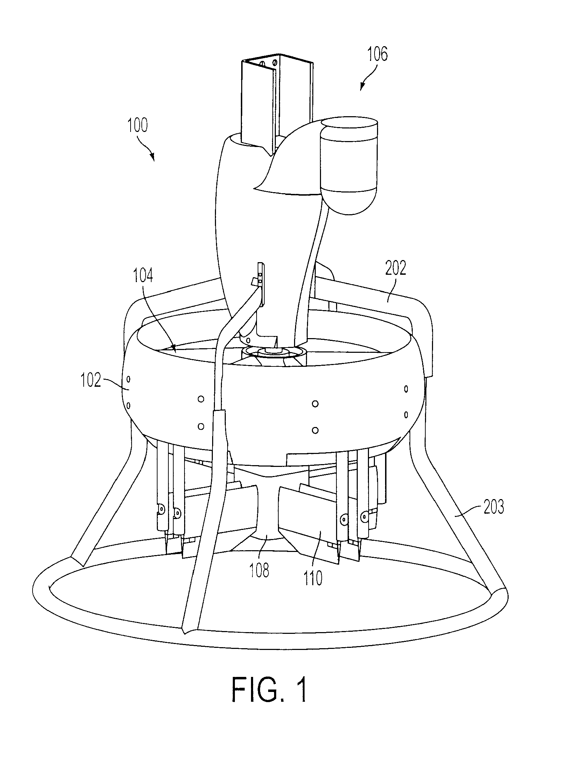

Fig. 1 is a pictorial representation of a typical ducted fan air-vehicle 100. The ducted fan air-vehicle 100 includes an air duct 102 having a fan 104 located within the air duct 102. The ducted fan air-vehicle may have a center body 106. The center body 106 may be a housing that contains other components of the air-vehicle 100, such as a camera. The center body 106 may also contain an engine for powering the air-vehicle 100. The center body 106 may contain additional components for air-vehicle operation, such as an avionics system.

The ducted fan air-vehicle 100 may also include a stator assembly 108 and a plurality of fixed and/or movable vanes 110 for providing thrust vectoring for the air-vehicle 100. The stator assembly 108 may be located just under the fan 104 within the air duct 102 to reduce or eliminate the swirl and torque produced by the fan 104. Further downstream of the stators, the thrust vectoring vanes 110 may be located within or outside the air duct 102. For instance, the vanes 110 may be placed slightly below an exit section of the air duct 102.

The ducted fan-air vehicle 100 may further include struts 202 which support the center body 106. Struts 202 also provide a connection for the landing gear 203 of the UAV.

In order to be effective and controllable in multiple flight conditions, ducted fan air-vehicles such as air-vehicle 100 preferably have clean and attached air flow around the duct lip in the multiple flight conditions. Further, ducted fan air-vehicles preferably have a favorable center of gravity in order to be effective and controllable. A uniform inflow velocity profile into the fan is also desirable to minimize the acoustic signature of the duct-fan interaction.

Additionally, ducted fan air-vehicles may need to carry a variety of components when in operation. For instance, in operation ducted fan air-vehicles may need to carry, without limitation, visual sensors, infrared sensors, cameras, radio communication devices, inertial sensor units, ground level sensor units, and/or payload. Due to the limited size of the ducted fan air-vehicle, in order to store the variety of units in the ducted fan, the units may be placed in external pods that are attached to the ducted fan air-vehicle. These pods may (i) cause a shift in the center of gravity, (ii) create negative interference with airflow characteristics inside the duct by blocking air intake and exhaust, and (iii) create additional drag on the UAV when the UAV is in forward flight. Additionally, the added weight of the equipment may require additional engine capacity and fuel storage capacity. It may be beneficial to increase the volume within the duct lip in order to decrease or eliminate the need for external pods while maintaining the aerodynamic requirements of a ducted fan air-vehicle.

Unmanned aerial vehicles ("UAVs") are remotely piloted or self-piloted aircraft that can carry cameras, sensors, communications equipment, or other payloads. A UAV is capable of controlled, sustained, level flight and is powered by either a jet or an engine. The UAVs may be remotely controlled or may fly autonomously based on pre-programmed flight plans or more complex dynamic automation systems.

UAVs have become increasingly used for various applications where the use of manned flight vehicles is not appropriate or is not feasible. Such applications may include military situations, such as surveillance, reconnaissance, target acquisition, data acquisition, communications relay, decoy, harassment, or supply flights. These vehicles are also used in a growing number of civilian applications, such as firefighting when a human observer would be at risk, police observation of civil disturbances or crime scenes, reconnaissance support in natural disasters, and scientific research, such as collecting data from within a hurricane.

Currently, a wide variety of UAV shapes, sizes, and configurations exist. Typically it is the payload of the aircraft that is the desired product, not the aircraft itself. A payload is what the aircraft is carrying. UAVs are the delivery system for a payload and are developed to fill a particular application and a set of requirements. As previously mentioned, there are numerous applications for which a UAV may be used. For each new application, a different type of payload may be used. Because different payloads may require different processing capabilities, or may comprise different sizes, a variation of the UAV typically must be developed for each type of payload, or a completely new aircraft typically must be designed. Designing a new aircraft or developing a variation of the current UAV in use is time-consuming and costly.

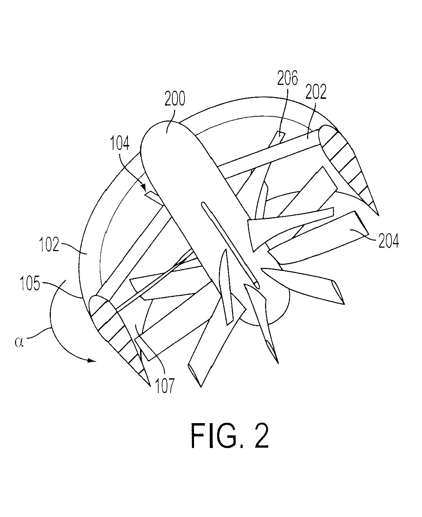

In ducted fans, the stators are used to remove the swirl (or flow rotation) introduced by the fan as it pushes the air through the duct. Removing the swirl improves the fan aerodynamic performance by converting the flow swirl energy into thrust. For reasons of compactness, the stators are generally positioned in close proximity downstream of the fan and within the duct (see Figure 2). This is the most efficient implementation from the structural point of view. Unfortunately, the close proximity of the stator to the fan leads to significant aerodynamically generated noise. The noise is generated by the interaction of the stator and the wakes created by the fan blades. This noise source is one of the key technical problems hindering the stealth characteristic of these vehicles and thus their successful implementation. Thus, it would be desirable to provide a ducted fan with reduced noise.

### SUMMARY

The present disclosure describes a ducted fan air-vehicle having a lean and swept stator design for optimum noise reduction. The ducted fan air-vehicle comprises an air duct including an outer rim and an inner rim, a fan located within the air duct having a plurality of rotor blades and rotating in a direction. The fan further includes a hub located in the fan, a plurality of struts extending from the hub and positioned adjacent the outer rim of the fan, a plurality of stators extending from the hub and positioned adjacent the inner rim of the fan, and the plurality of rotor blades extending from the hub and positioned between the plurality of struts and the plurality of stators. The plurality of stators are lean in a plane of fan rotation and swept in a plane normal to fan rotation.

A method for arranging stators in a ducted fan air-vehicle is also described. The method includes providing an air duct including an outer rim and an inner rim, providing a fan located within the air duct having a plurality of rotor blades and rotating in a direction, providing a hub located in the fan, providing a plurality of struts extending from the hub and positioned adjacent the outer rim of the fan, providing a plurality of stators extending from the hub and positioned adjacent the inner rim of the fan, and providing the plurality of rotor blades extending from the hub and positioned between the plurality of struts and the plurality of stators. The method further includes leaning the plurality of stators in a plane of fan rotation and sweeping the plurality of stators in a plane normal to fan rotation to reduce noise generated by the ducted fan air-vehicle.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Fig. 1 is a front view of a typical ducted fan air-vehicle;
Fig. 2 is a perspective view of the stator arrangement in a typical ducted fan air-vehicle;
Fig. 3A is a top view of the stator arrangement of Fig. 2;
Fig. 3B is a top view of the stator arrangement in a ducted fan air-vehicle of the present application;
Fig. 4A is a perspective view showing the stator arrangement in a ducted fan air-vehicle of the present application;
Fig. 4B is a side view of the air duct shown in Fig. 4A;
Fig. 5 is a perspective view of an alternate embodiment of the stator arrangement of the present application; and
Fig. 6 is a side view of an alternate embodiment of the stator arrangement of the present application.

### DETAILED DESCRIPTION

Ducted fan air-vehicles are known for their superior stationary aerodynamic hovering performance, three-dimensional precision position hold, low speed flights, precision vertical take-off and landing ("VTOL") and safe close-range operations. Ducted fan air-vehicles may be preprogrammed to perform operations autonomously, or they may be controlled by a human operator. Therefore, ducted fan air-vehicles may be unmanned aerial vehicles ("UAV").

UAVs may have avionics equipment on board to control the flight and operation of the UAV. For instance, the avionics may control the direction, flight, stability compensation, and other aspects of flight control. Additionally, UAVs may carry a variety of equipment on board tailored to the mission the UAVs are assigned to accomplish. UAVs may carry sensors on board to obtain information about surroundings, or the UAVs may carry a payload to be deposited at a target site. The UAV engine to drive the UAV requires that fuel be carried on board the UAV. The avionics equipment, sensors, payload, and fuel may be stored on the UAV.

In order to be effective and controllable in multiple flight conditions, ducted fan air-vehicles preferably have clean and attached air flow around the duct lip in the multiple flight conditions. Further, ducted fan air-vehicles preferably have a favorable center of gravity in order to be effective and controllable. A uniform inflow velocity profile into the fan is also desirable to minimize the acoustic signature of the duct-fan interaction.

The invention in practice is implemented by both leaning and sweeping the stators and/or the struts, located within the fan of the UAV, to get the maximum noise reduction. Sweep is defined as an axial displacement of the stator leading edge that varies along the span. Similarly, lean is defined as circumferential displacement of the stator. The reason for the effectiveness of sweep and lean is that it introduces a phase variation in the upwash velocity, which causes the noise, resulting in strong cancellation between contributions to the noise field from different locations along the stator span.

There is a particular combination of lean and sweep that leads to optimum noise reduction. This optimum configuration is system dependant upon the characteristics of each particular vehicle, such as fan design, fan speed, diameter, number of fan blades, and number of stator vanes.

Referring to Figure 2, a fan 104, or rotor, of a ducted fan air-vehicle is shown. The fan 104 rotates in a direction indicated by arrow α. The fan 104 is located within an air duct 102 which includes an outer rim 105 and an inner rim 107. The fan includes a hub 200 which serves as an attachment point for several segments. The segments may include a plurality of struts 202, a plurality of stators 204, and a plurality of fan or rotor blades 206. Each of the segments may be welded to the hub 200, or alternatively may be attached to the hub 200 by any suitable attachment means. In this embodiment, four (4) struts are used in conjunction with five (5) rotor blades 206 and nine (9) stators 204. However, an alternate number of struts, rotor blades, and stators can be used. The optimum number depends upon various factors such as fan design, fan speed, diameter, number of fan blades, and number of stator vanes. The spacing between the rotor blades 206 and stators 204 on the hub 200 may range from 1 to 4 inches.

The struts 202 are generally positioned in close proximity upstream of the fan 104, near the outer rim 105 of the air duct 102. The struts may also be attached to the outer rim 105 of the air duct. The struts function to support the center body 106, and also provide a connection to landing gear 203. The struts 202 also interconnect the center body 106 and the air duct 102.

For reasons of compactness, the stators 204 are generally positioned in close proximity downstream of the fan 104, near the inner rim 10 of the air duct 102. The stators 204 function to remove the swirl (or flow rotation) introduced by the fan as it pushes air through the duct. Removing the swirl improves the fan aerodynamic performance by converting the flow swirl energy into thrust. The stators 204 also provide additional structural integrity to the system by, e.g., structurally interconnecting the center body 106 and the air duct 102.

The fan 104 contains the rotor blades 206 that need to be very well centered in relation to the air duct 102. The rotor blades 206 are generally positioned between the struts 202 and the stators 204. The rotor functions to provide thrust so the vehicle can lift, hover, cruise, etc. A power plant or engine (not shown) is needed to spin and force air through the duct.

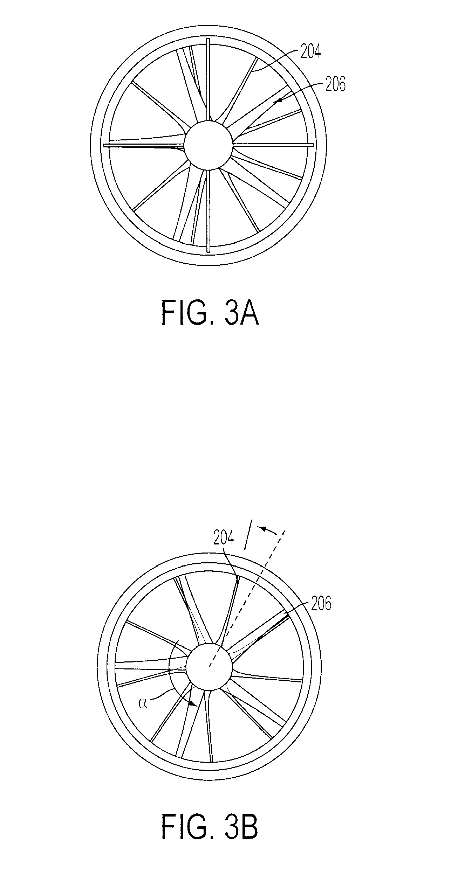

In a conventional UAV, as shown in Fig. 3A, the stators 204 are positioned in a radially straight configuration. In the design of the present application, the stators 204 are lean (rotated) in the plane of the fan rotation as shown in Figure 3B. Leaning the stators prevents the wakes from the rotor blades to strike the stators simultaneously along the stator leading edge. When the stator is leaned, the wakes strike the stators progressively thus reducing the noise. To be effective, the leaning of the stators 204 should be in the direction of the fan rotation which is indicated by arrow α. The direction of rotation is important because one direction leads to noise reduction, while the opposite direction leads to increased noise. The optimum angle of rotation varies on each particular UAV, but generally the angle could be as high as 20° for maximum noise reduction.

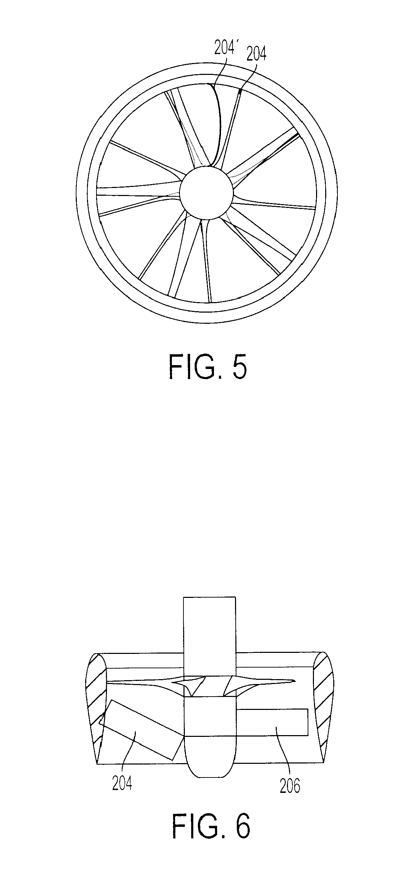

In another embodiment, lean of the stators 204 may be implemented by curving the stators 204. Due to simplicity in the fabrication process, stators are generally straight as shown in the Fig. 3A. However, another way to reduce the noise is by bending the stators 204 to create curved stators 204', as shown in Fig. 5. The curved stators 204' may be curved at an angle ranging between 10° to 30°

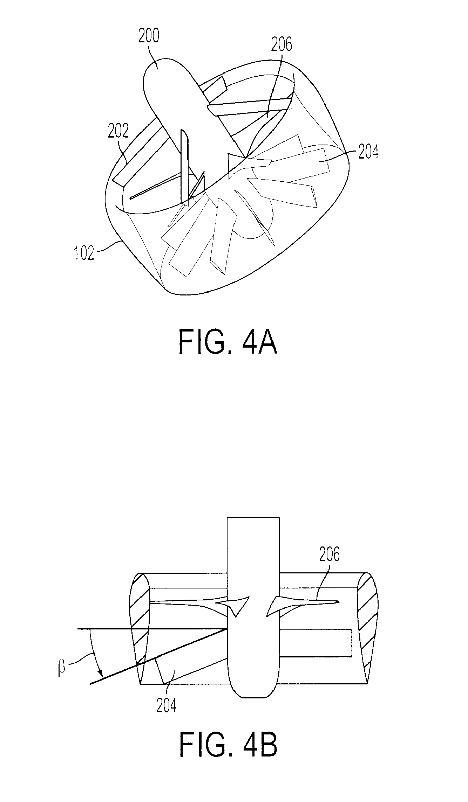

The stators 204 are also swept in a plane normal to the fan rotation, as shown in Figs. 4A and 4B. The stators are swept downstream at an angle β to prevent interaction with the rotor blades 206. The noise reduction using this configuration works in a manner similar to the lean. Figure 4B shows the difference between the position of a traditional stator and the stator 204 of the present application. The stators 204 may be swept at any angle β in the range of 0° to 20°. The optimum sweep angle varies on each particular UAV, but generally an angle of about 20° will have the maximum noise reduction.

In another embodiment, the stators 204 may be swept by moving the end of the stator connected to the hub downstream on the hub 200, as shown in Figure 6. The stators 204 are then swept upstream at an angle ranging between 0° and 20°.

Furthermore, the plurality of stators 204, the hub 200, and the air duct 102 may be manufactured as a single component to be incorporated into the UAV for easy assembly of the vehicle and provide a stiff structure, as compared to having a set of individual stators that need to be assembled.

While certain features and embodiments of the present application have been described in detail herein, it is to be understood that the application encompasses all modifications and enhancements within the scope and spirit of the following claims.

## Claims

1. A ducted fan air-vehicle comprising:
an air duct including an outer rim and an inner rim;
a fan located within the air duct, the fan having a plurality of rotor blades and rotating in a direction;
a hub located in the fan;
a plurality of struts extending from the hub and positioned adjacent the outer rim of the fan;
a plurality of stators extending from the hub and positioned adjacent the inner rim of the fan; and
the plurality of rotor blades extending from the hub and being positioned between the plurality of struts and the plurality of stators;
wherein the plurality of stators are lean in a plane of fan rotation and swept in a plane normal to fan rotation.

2. The ducted fan air-vehicle of claim 1 wherein the plurality of stators are swept in the direction of fan rotation.

3. The ducted fan air-vehicle of claim 1 wherein the angle of lean of the plurality of stators is about 20°.

4. The ducted fan air-vehicle of claim 1 wherein the angle of sweep of the plurality of stators is between 0° and 20°.

5. The ducted fan air-vehicle of claim 1 wherein the angle of sweep of the plurality of stators is about 20°.

6. The ducted fan air-vehicle of claim 1 wherein the spacing between the plurality of rotor blades and the plurality of stators at the hub ranges from about 1 to about 4 inches.

7. The ducted fan air-vehicle of claim 1 wherein the struts are attached to the air duct.

8. The ducted fan air-vehicle of claim 1 wherein the lean of the plurality of stators is implemented by curving the plurality of stators.

9. The ducted fan air-vehicle of claim 1 wherein the plurality of stators are swept by moving an end of the stator connected to the hub downstream on the hub.

10. The ducted fan air-vehicle of claim 1 wherein the plurality of stators, the hub, and the air duct are manufactured as a single component.
